(19) Europäisches Patentamt
European Patent Office
Office européen des brevets

(11) **EP 2 123 165 A1**

(12) **EUROPÄISCHE PATENTANMELDUNG**

(43) Veröffentlichungstag:
   **25.11.2009 Patentblatt 2009/48**

(51) Int Cl.:
   *A23C 19/045* *(2006.01)*    *A23C 19/09* *(2006.01)*

(21) Anmeldenummer: **08010259.3**

(22) Anmeldetag: **05.06.2008**

(84) Benannte Vertragsstaaten:
   **AT BE BG CH CY CZ DE DK EE ES FI FR GB GR
   HR HU IE IS IT LI LT LU LV MC MT NL NO PL PT
   RO SE SI SK TR**
   Benannte Erstreckungsstaaten:
   **AL BA MK RS**

(30) Priorität: **23.05.2008   DE 202008007416 U**

(71) Anmelder: **Zott GmbH & Co. KG
   86690  Mertingen (DE)**

(72) Erfinder: **Schmid, Manuel Willibald
   86687 Altisheim, (DE)**

(74) Vertreter: **HOFFMANN EITLE
   Patent- und Rechtsanwälte
   Arabellastrasse 4
   81925 München (DE)**

(54) **Käsehaltige Lebensmittel**

(57)   Die vorliegende Erfindung betrifft ein käsehaltiges Lebensmittel, welches sich typischerweise von Lebensmitteln auf Hackfleischbasis durch Ersatz des Hackfleischs durch Käsepartikel ableitet, ein Verfahren zu
dessen Herstellung, dessen Verwendung in der Herstellung von Fertiggerichten, sowie die so erhaltenen Fertiggerichte. Die vorliegende Erfindung betrifft weiterhin Zwischenprodukte für die Herstellung des erfindungsgemäßen Lebensmittels, ein Verfahren zur Herstellung eines
Käsematerials, welches sich als Ausgangsmaterial für
die Herstellung des erfindungsgemäßen Lebensmittels
eignet, sowie das so erhaltene Käsematerial.

**EP 2 123 165 A1**

**Beschreibung**

**1. Gebiet der Erfindung**

Die vorliegende Erfindung betrifft käsehaltige Lebensmittel und insbesondere Lebensmittel, die durch Erhitzen zubereitet werden und sich von Fleischgerichten durch partiellen oder vollständigen Ersatz des Fleisches durch Käse ableiten lassen.

**2. Stand der Technik**

Die Verwendung von Käse zur Herstellung von Lebensmitteln ist seit langem bekannt. Bekannt sind weiterhin Käse, die sich zum Erhitzen, wie z.B. zum Braten oder Backen, eignen. Hierbei ist zu unterscheiden zwischen Käsen, die beim Erhitzen ihre Form behalten, sowie Käsen und Käsezubereitungen, die beim Erhitzen schmelzen und/oder zerlaufen. Ein im Handel erhältlicher Vertreter der erstgenannten Gruppe der hitzestabilen Käse ist der "Grill- & Pfannenkäse, Kräuter-Mediterran (Schnittkäse 50 % Fett i. Tr.)" von Grünland. Ein typischer Vertreter der nicht hitzestabilen Käseprodukte ist Camembert. Bei der Verwendung derartiger Käse wird das Zerlaufen des Käses beim Erhitzen durch geeignete zusätzliche Maßnahmen, wie beispielsweise durch Panierung, eingedämmt. Ein derartiges im Handel erhältliches Produkt ist der "Back Camembert" von Tip/Goldhand Vertriebsgesellschaft mbH.

Vielfach werden die organoleptischen Eigenschaften sowohl der hitzestabilen Käseprodukte als auch der panierten Käseprodukte als unbefriedigend empfunden. Beide Käseprodukte bestehen aus homogenen Massen, das heißt eine mit dem Auge erkennbare Struktur ist nicht vorhanden - würzende, sichtbare Teilchen ausgenommen. Überdies werden panierte Gerichte von vielen Konsumenten aus anderen Gründen abgelehnt.

**3. Zusammenfassung der Erfindung**

Die vorliegende Erfindung hat sich zur Aufgabe gestellt, die Nachteile der aus dem Stand der Technik bekannten Lebensmittel auf Käsebasis zu beheben. So sollen Lebensmittel auf Käsebasis bereit gestellt werden, welche vielseitig zubereitet und angerichtet werden können, welche beim Erhitzen die Form behalten, ohne dass es einer Panierung bedarf und welche ansprechende organoleptische Eigenschaften aufweisen.

Die vorliegende Erfindung hat sich weiterhin zur Aufgabe gestellt, vorteilhafte Herstellungsverfahren und Anwendungen für derartige Lebensmittel auf Käsebasis bereitzustellen.

Eine weitere der vorliegenden Erfindung zu Grunde liegende Aufgabe betrifft die Bereitstellung eines Käsematerials, welches sich für das erfindungsgemäße Lebensmittel besonders gut als Ausgangsmaterial eignet.

Erfindungsgemäß werden diese Aufgaben durch die in den nachfolgenden unabhängigen Patentansprüchen beschriebenen Produkte und Herstellungsverfahren hierfür gelöst. Bevorzugte Ausführungsformen der vorliegenden Erfindung sind in den nachfolgenden abhängigen Patentansprüchen beschrieben.

**4. Ausführliche Beschreibung der Erfindung**

**4.1 Definitionen und Messverfahren**

Soweit nicht anders angegeben bezieht sich der Begriff "Käsematerial" auf Käse im Sinne der Deutschen Käseverordnung in der Fassung vom 14. April 1986, zuletzt geändert durch Art. 21 der Verordnung zur Durchführung von Vorschriften des gemeinschaftlichen Lebensmittel-Hygienerechtes vom 08.08.2007 (BGBL I. S. 1816). Ferner bezieht sich der Begriff "Käsematerial" auch auf Käse-ähnliche Produkte, bei denen beispielsweise Milchfett ganz oder teilweise durch pflanzliche Fette ersetzt ist oder denen andere Stoffe als Ausgangsmaterialien außerhalb der Regelungen der Käseverordnung zugegeben sind. Im Sinne der vorliegenden Erfindung können auch käseartige Materialien wie das in DE 202 21 020 U1 und/oder anderen Mitgliedern dieser Patentfamilie und das in NL 1008364 C hergestellte sowie das in WO 1996/131177 A beschriebene Material als Käsematerial eingesetzt werden.

Soweit nicht anders angegeben bezieht sich der Begriff "Gewürz" auf Stoffe, die der Geschmacksverbesserung von Lebensmitteln dienen oder deren Bekömmlichkeit verbessern.

Soweit nicht anders angegeben bezieht sich der Begriff "Lebensmittel" auf Stoffe, die dazu bestimmt sind, in unverändertem, zubereitetem oder verarbeitetem Zustand von Menschen verzehrt zu werden.

Soweit nicht anders angegeben bezieht sich der Begriff "Fertiggericht" auf Lebensmittel und Lebensmittelzubereitungen, die ggf. nach Erhitzen jedoch ohne weitere Zubereitungsschritte zum Verzehr geeignet und bestimmt sind.

Soweit nicht anders angegeben bezieht sich der Begriff "Zwischenprodukt" auf Lebensmittel und Lebensmittelzubereitungen, die neben optionalem Erhitzen erst durch weitere Zubereitungsschritte dem Verzehr zugänglich gemacht werden.

Soweit nicht anders angegeben bezieht sich der Begriff "Beilage" auf Lebensmittel und Lebensmittelzubereitungen, die getrennt von einem Hauptgericht, wie beispielsweise dem erfindungsgemäßen käsehaltigen Lebensmittel, zubereitet werden können und zum gemeinsamen Verzehr mit dem Hauptgericht bestimmt sind.

Soweit nicht anders angegeben bezieht sich der Begriff "Nugget" auf Lebensmittel, die durch unregelmäßige Form gekennzeichnet sind und die als "Fingerfood" geeignet ist und so Verwendung finden.

Soweit nicht anders angegeben bezieht sich der Begriff "hitzestabil" auf Lebensmittel, die bei bestimmungsgemäßer Zubereitung ihre Form beibehalten, also weder zerfallen noch zerlaufen. Geringfügige Veränderungen der Form sind akzeptabel sofern sie weder die Zubereitung noch den optischen Gesamteindruck des zubereiteten Lebensmittels beeinträchtigen.

Soweit nicht anders angegeben bezieht sich der Begriff "formstabil" auf Lebensmittel, die bei Raumtemperatur ohne Fremdeinwirkung ihre Form über einen vorgegebenen Zeitraum (z.B. 2 Wochen) unter vorgegebenen Bedingungen (z.B. 4°C und 50% rel. Luftfeuchte) nicht wesentlich (z.B. weniger als 5% Veränderung der Ausmaße in allen Hauptachsen) verändern.

Soweit nicht anders angegeben bezieht sich der Begriff "Trockenmasse" auf die Masse eines Käsematerials, das durch die Messung des Gewichtsverlusts nach Trocknung bei 102°C gemäß ISO 5534: 2004 bestimmt wird.

Soweit nicht anders angegeben bezieht sich der Begriff "Partikelgröße" auf die mittlere Länge der größten Hauptachse der Partikel.

Soweit nicht anders angegeben bezieht sich der Begriff "Proteingehalt" auf den durch den Stickstoffgehalt gemäß § 64 LFGB L 01.00-10 ermittelten Proteingehalt.

Soweit nicht anders angegeben bezieht sich der Begriff "Molkenproteingehalt" auf den mittels Elektrophorese, SDS Page nach DIN 10472 ermittelten Gehalt an Molkenprotein. Hierbei bezieht sich die Gehaltsangabe auf die elektrophoretisch bestimmte Gesamtmenge an Milchproteinen.

Soweit nicht anders angegeben bezieht sich der Begriff "Fettgehalt" auf den nach Weibull gemäß IDF 126A: 1988 ermittelten Gehalt an Fett.

Soweit nicht anders angegeben bezieht sich der Begriff "Furosingehalt" auf den gemäß in folgender Publikation beschriebenen Methode bestimmten Gehalt: Resmini P, Pellegrino L, Battelli G: "Accurate quantification of furosine in milk and dairy products by a direct HPLC method", in Ital. J. Food Sei. n. 3 - 1990, 173-183.

Soweit nicht anders angegeben bezieht sich der Begriff "Gehalt an denaturiertem β-Lactoglobulin" auf den Gehalt an denaturierter Form des β-Lactoglobulin, der wie nachfolgend beschrieben bestimmt wird. β-Lactoglobulin zählt zu der Fraktion der Molkenproteine. Eine Denaturierung kann durch thermische, chemische oder mechanische Einflüsse bedingt sein. Als Ergebnis der Denaturierung bilden sich über entstehende Disulfidbrücken vernetzte Protein- und Makromoleküle. Grundlage der Analytik ist die Elektrophorese (SDS Page) nach DIN 10472. Die Probe wird nach der zur Proteinauffaltung erfolgten Vorbehandlung mit Natriumdodecylsulfat (SDS) in zwei Teile A und B aufgeteilt und auf unterschiedliche Weise weiterbehandelt. Probe A wird mit Dithiothreitol (DTT) behandelt. DTT bewirkt, dass durch Disulfidbrücken vernetztes β-Lactoglobulin wieder in ihre Monomere reduziert wird. Bestimmung der Menge an monomerem β-Lactoglobulin durch die genannte elektrophoretische Methode. Probe B wird nicht mit Dithiothreitol (DTT) behandelt. Bestimmung der Menge an monomerem β-Lactoglobulin durch die genannte elektrophoretische Methode. Das Ergebnis wird wie folgt berechnet:

$$100\% \times (1 - (\text{Menge des } \beta\text{-Lactoglobulin in Probe B} / \text{Menge des } \beta\text{-Lactoglobulin in Probe A}))$$

### 4.2 Erfindungsgemäßes käsehaltiges Lebensmittel - Überblick

Das erfindungsgemäße Produkt ist ein käsehaltiges Lebensmittel, welches dadurch gekennzeichnet ist, dass Käse zwar einerseits einen der strukturbildenden Hauptbestandteile des Lebensmittels darstellt, andererseits jedoch das Lebensmittel im Hinblick auf den darin enthaltenen Käse nicht in homogener Form vorliegt. So stellt die Erfindung ein käsehaltiges Lebensmittel bereit, das neben Käse typischerweise noch weitere Zutaten enthält und in dem der Käse in Form einzelner Partikel vorliegt. Diese Käsepartikel bilden gemeinsam mit den weiteren Zutaten und Bestandteilen des Lebensmittels ein heterogenes Ganzes, in dem die Käsepartikel auch nach der Zubereitung als solche identifizierbar sind. Die erfindungsgemäßen käsehaltigen Lebensmittel zeichnen sich insbesondere dadurch aus, dass sie auch unter Erhitzen ihre Form behalten ohne einer Panierung zu bedürfen.

Diese für die Erfindung charakteristischen Eigenschaften können durch ein Beispiel veranschaulicht werden: Eine für die Erfindung typische Ausführungsform ist die "Frikadelle auf Käsebasis", bei der der Fleischanteil durch Partikel eines geeigneten Käsematerials ersetzt ist. Diese erfindungsgemäße Käsefrikadelle zeichnet sich durch die typischen Brateigenschaften fleischhaltiger Frikadellen aus, d.h. sie kann in der Pfanne bei hoher Temperatur zubereitet werden ohne dass der darin enthaltende Käse schmilzt und/oder zerläuft. Die in der erfindungsgemäßen Käsefrikadelle enthaltenen Käsepartikel sind mit den übrigen Zutaten (wie z.B. Brot und Ei) vermischt und bilden eine kompakte heterogene Masse. Dieser heterogene Aufbau trägt zu den hervorragenden organoleptischen Eigenschaften des erfindungsgemäßen Lebensmittels bei.

Der Gehalt an Käsematerial im erfindungsgemäßen Lebensmittel beträgt zumindest 20 Gew.-%, vorteilhafterweise mindestens 30 Gew.-%, bevorzugt mindestens 35 Gew.-%, stärker bevorzugt 40 Gew.-% oder mehr und am stärksten bevorzugt 45 Gew.-% bis 98 Gew.-% und insbesondere 50 Gew.-% bis 90 Gew.-%.

Die Menge und Art der übrigen Zutaten des erfindungsgemäßen Lebensmittels sind nicht festgelegt und können nach Wunsch gewählt werden. Als Orientierung bieten sich Rezepturen für Gerichte mit Fleisch und insbesondere Hackfleisch an, bei denen ein Teil oder das ganze Fleisch durch Käsematerial ersetzt wird. Der Einsatzbereich der vorliegenden Erfindung ist jedoch nicht auf "Käsevarianten" bekannter (Hack-)Fleischgerichte beschränkt.

### 4.3 Eigenschaften Käsematerial

Das einzusetzende Käsematerial ist vorzugsweise schnittfest und auch im erhitzten Zustand formstabil. Denkbar ist jedoch auch die Verwendung eines Käsematerials, welches diese Eigenschaften in geringerem Maße aufweist. In diesem Falle ist der Mangel an Schnittfestigkeit und/oder Formstabilität beim Erhitzen durch Zusatz geeigneter technofunktioneller Stoffe auszugleichen. Bevorzugt ist jedoch die Verwendung von Käsematerialien, die keiner weiteren stabilisierenden Unterstützung bedürfen.

Die Trockenmasse des Käsematerials ist nicht zwingend vorgegeben. Die Verwendung von Käsematerialien mit einer Trockenmasse von über 30 Gew.-% hat sich jedoch als vorteilhaft herausgestellt. Bevorzugt werden Käsematerialien eingesetzt, deren Trockenmasse im Bereich von 35 bis 70 Gew.-% liegt. Stärker bevorzugt ist der Bereich von 40 bis 70 Gew.-%, noch stärker bevorzugt 45 bis 70 Gew.-% und am stärksten bevorzugt 45 bis 65 Gew.-% und insbesondere 45 bis 60 Gew.-% Trockenmasse.

Ein weiterer die relevanten Eigenschaften des Käsematerials bestimmender Parameter ist der Gehalt an Molkenprotein im Milcheiweiß. Dieser Parameter sollte vorteilhafterweise im Bereich von 0 bis 60% liegen. Käsematerialien mit einem Molkenproteinanteil im Bereich von 5 bis 50% sind stärker bevorzugt, am stärksten bevorzugt ist ein Molkenproteingehalt von 10 bis 40% und insbesondere 10 bis 35%.

Der Gehalt an Molkenprotein kann durch gemeinsames Ausfällen mit anderen Milchproteinen gesteigert werden, wie es beispielsweise in dem in Abschnitt 4.4 beschriebenen Herstellungsverfahren durch Zugabe von Säure nach Erhitzen bewerkstelligt wird. Denkbar ist jedoch auch die Verwendung von Käsematerialien, die einen erhöhten Molkenproteinanteil aufweisen, da dem Ausgangsmaterial, der Käsereimilch, zusätzliches Molkenprotein zugegeben wird. Derartiges zusätzliches Molkenprotein kann mikropartikuliert sein. Eine Zugabe von Molkenprotein ist grundsätzlich zu jedem Zeitpunkt des Käsereiverfahrens möglich. Ebenso möglich ist die Verwendung von Käsematerialien, deren Herstellung einen nachträglichen Behandlungsschritt, bei dem der Rohkäse in Molke oder einer anderen molkenproteinhaltigen Lösung eingetaucht und so mit Molkenprotein imprägniert wird, umfasst. Bevorzugt ist jedoch eine gemeinsame Ausfällung des Molkenproteins mit dem übrigen Milcheiweiß.

Der Fettgehalt des einzusetzenden Käsematerials unterliegt keinerlei Beschränkungen. Der Fettgehalt kann im Rahmen der vorliegenden Erfindung frei gewählt werden und wird bestimmt im Hinblick auf die gewünschten Eigenschaften des fertigen Lebensmittels. Vorteilhafte Käsematerialien weisen einen Fettgehalt in der Trockenmasse von 40 % bis 55 % auf.

Auch der Calciumgehalt des Käsematerials ist nicht sonderlich festgelegt. Wenn das Käsematerial durch Hitze-Säure-Fällung, wie in Abschnitt 4.4 beschrieben, hergestellt wird, ist der Calciumgehalt eine Konsequenz sowohl des eingestellten pH Wertes als auch der Wahl der für die Fällung eingesetzten Säure.

Das einzusetzende Käsematerial weist vorzugsweise einen Furosingehalt von mehr als 10 mg/kg auf. Stärker bevorzugt sind Käsematerialien mit einem Furosin-Gehalt von mehr als 20 mg/kg, noch stärker bevorzugt von mehr als 40 mg/kg.

Anhand des Gehaltes an Furosin lässt sich die Hitzebelastung von Milch und Produkten aus Milch einschätzen. Furosin bildet sich im Zusammenhang mit der bekannten "Maillard-Reaktion" unter Hitzeeinwirkung zwischen der ε-Aminogruppe der Proteine und dem Disaccharid Lactose. Das primär gebildete Lactosylamin geht durch Amadori-Umlagerung über zwei weitere Zwischenstufen in die Folgeprodukte Furosin und Pyridosin über.

Die oben genannten bevorzugten Furosin-Bereiche sind indikativ für Wärmebehandlungen, die zu einer vorteilhaften Konsistenz des Käsematerials führen.

Je nach Art der Herstellung kann der Anteil des denaturierten β-Lactoglobulin am gesamten β-Lactoglobulin stark variieren. Hier gibt es keine Festlegung. Bevorzugte Käsematerialien, die durch das in Abschnitt 4.4 beschriebene Verfahren hergestellt werden, weisen typischerweise einen Denaturierungsgrad des β-Lactoglobulin von mehr als 70 % auf. Durch Erhitzen von Milch kommt es zu einer Aktivierung von Thiolgruppen von Molkenproteinen und einem nachfolgenden Thiol-Disulfidaustausch beispielsweise zwischen κ-Casein und β-Lactoglobulin, einer Fraktion des Molkenproteins oder auch zwischen β-Lactoglobulin untereinander. Durch gesteuerte Denaturierung lassen sich die Produkteigenschaften des Käsematerials gezielt beeinflussen und so eine vorteilhafte Konsistenz erzielen.

Neben dem Einsatz eines einzigen Käsematerials ist auch die Verwendung zweier oder mehrerer Käsematerialien im Rahmen der vorliegenden Erfindung möglich. In diesem Falle ist es bevorzugt, dass jedes der eingesetzten Käsematerialien die oben beschriebenen Eigenschaften aufweist. Kleinere Mengen (z.B. bis 30%) an weniger gut geeignetem Käsematerial können jedoch mit größeren Mengen (z.B. 70% oder mehr) an besonders gut geeignetem Käsematerial kombiniert werden. Überdies besteht, wie eingangs angedeutet, die Möglichkeit geringere oder mangelnde Eignung eines Käsematerials durch Zusatz geeigneter technofunktioneller Stoffe auszugleichen. Derartige technofunktionelle Stoffe werden im nachfolgenden Abschnitt 4.5 näher beschrieben.

Für die vorliegende Erfindung geeignete Käsematerialien im weitesten Sinne sind insbesondere Käsematerialien, die sowohl im Käseanteil einen Furosin-Gehalt von mehr als 10 mg/kg, als auch einen Molkenproteingehalt im Milcheiweiß von 0 bis 40 % aufweisen. Stärker bevorzugt sind derartige Käsematerialien, die überdies schnittfest sind. Noch stärker bevorzugt ist die Verwendung derartiger Käsematerialien, die auch beim Erhitzen formstabil bleiben. Noch stärker bevorzugte Käsematerialien sind insbesondere gekennzeichnet durch einen Furosin-Gehalt von mehr als 20 mg/kg sowie einen Gehalt an Molkenproteinen im Milcheiweiß von 5 bis 40%. Unter diesen Käsematerialien haben sich jene als besonders geeignet herausgestellt, die einen Denaturierungsgrad des β-Lactoglobulin von mehr als 70 % aufweisen.

Besonders bevorzugt sind überdies Käsematerialien, die nach dem in Abschnitt 4.4 beschriebenen Verfahren hergestellt wurden. Hierzu gehören insbesondere Käsematerialien, die einen Furosin-Gehalt von mehr als 40 mg/kg sowie einen Molkenproteingehalt im Milcheiweiß von 10 bis 40 % aufweisen. Die am stärksten bevorzugten Käsematerialien weisen diese Parameter auf und zeigen überdies einen Denaturierungsgrad des β-Lactoglobulin von mehr als 70 % .

## 4.4 Herstellung Käsematerial

Ein für die Verwendung in der vorliegenden Erfindung vorteilhaftes Käsematerial kann wie nachfolgend beschrieben hergestellt werden.

Als Ausgangsmaterial wird Milch eingesetzt, die einen Fettgehalt von 0 bis 7 Gew.-%, bevorzugt 2,5 bis 4,5 Gew.-%, stärker bevorzugt 3,0 bis 4,5 Gew.-%, noch stärker bevorzugt 3,2 bis 3,8 Gew.-% und am stärksten bevorzugt etwa 3,5 Gew.-% aufweist. Milchfett kann ganz oder teilweise durch pflanzliches Fett ersetzt sein. Auch andere Stoffe ausserhalb der Regelungen der Käseverordnung können als Ausgangsmaterialien zugegeben sein. Das Ausgangsmaterial ist vorteilhafterweise pasteurisiert, dies ist jedoch keine notwendige Voraussetzung. Gegebenenfalls kann eine Homogenisierung Anwendung finden.

Es können auch Ausgangsmaterialien aus Milch eingesetzt werden, die durch Ultrafiltration oder Mikrofiltration von Milch entstanden sind und die nachfolgend durch Zumischen von Rahm, anderen Milchprodukten mit höherem Fettgehalt oder Pflanzenfett enthaltende Materialien standardisiert wurden, gegebenenfalls unter Homogenisieren.

Es können auch Ausgangsmaterialien aus Milch, bei der ggf. Milchfett ganz oder teilweise durch Pflanzenfett ersetzt ist, Verwendung finden, die durch Konzentrieren von Milch entstanden sind.

Weiterhin können Ausgangsmaterialien eingesetzt werden, die durch Mischung der oben genannten Materialien erhalten werden.

Weitere Vorbehandlungsschritte und/oder der Einsatz von Zusatzstoffen sind im Rahmen der vorliegenden Erfindung weder erforderlich noch ausgeschlossen, soweit derartige Maßnahmen die Erzielung der erfindungswesentlichen Eigenschaften nicht beeinträchtigen.

**Schritt (a):** In einem ersten Verfahrensschritt wird die einzusetzende Milch oder das Ausgangsmaterial aus Milch auf Temperaturen über 75 °C aufgeheizt. Möglich sind auch Temperaturen über 100 °C, wie sie z.B. bei der UHT-Erhitzung üblich sind. Dies kann über geeignete Apparaturen wie z.B. Platten- und/oder Röhrenwärmetauscher ("indirekte Erhitzung") oder mittels Dampfinjektion ("direkte Erhitzung") erfolgen. Geeignete Verfahren und Apparaturen sind dem Fachmann bekannt und werden in der einschlägigen Literatur (s. z.B. Kessler HG: "Lebensmittel- und Bioverfahrenstechnik", Verlag A. Kessler München, 4. Auflage 1996), beschrieben. Am Ende dieses Erhitzungsschrittes sollte die Temperatur der Milch oder des Ausgangsmateriales aus Milch im Fertiger in einem Bereich von 75 bis 100 °C, bevorzugt 80 bis 98 °C, stärker bevorzugt 85 bis 97 °C, noch stärker bevorzugt 90 bis 96 °C und am stärksten bevorzugt etwa 95 °C betragen. Bei einer Erhitzung auf eine Temperatur oberhalb der Zieltemperatur im Fertiger erfolgt ein zwischengeschalteter Abkühlungsschritt, z.B. über Wärmetausch.

Die Dauer des Erhitzens ist nicht näher festgelegt solange die gewünschte charakteristische Eigenschaft (insbes. der Anteil an denaturiertem β-Lactoglobulin) des erhaltenen Käsematerials erhalten wird. Bei einer Erhitzung auf 95 °C hat sich eine Dauer der Erhitzung von 15 min bis 45 min als vorteilhaft erwiesen.

Wenn anstelle von Milch andere der oben beschriebenen Ausgangsmaterialien eingesetzt werden, kann es erforderlich werden, die oben angegebenen empirisch bestimmten Temperaturbereiche anzupassen. Dies kann an Hand der charakteristischen Eigenschaften (Furosingehalt, Gehalt an Molkenprotein und/oder Anteil an denaturiertem β-Lactoglobulin) des erhaltenen Käsematerials geschehen: Hierbei wird die Erhitzungstemperatur und -dauer systematisch variiert bis die gewünschten Eigenschaften erhalten werden. Vorteilhafterweise wird bei vorgegebener Erhitzungszeit die Erhitzungstemperatur anhand des Denaturierungsgrades des β-Lactoglobulin optimiert.

**Schritt (b):** Der erhitzten Milch oder dem Ausgangsmaterial aus Milch (die nachfolgende Beschreibung des erfindungsgemäßen Verfahrens bezieht sich zur Vereinfachung lediglich auf "Milch". Soweit nicht anders angegeben sollen hiermit auch die alternativen Ausgangsmaterialien aus Milch, wie oben beschrieben, umfasst werden) wird in einem nächsten Verfahrensschritt Säure zugegeben. Geeignet sind organische und anorganische Säuren, soweit sie für Nahrungsmittel geeignet sind. Typische Beispiele sind Milchsäure, Zitronensäure, Salzsäure, Schwefelsäure oder geeignete Mischungen hiervon. Bevorzugt sind organische Säuren, besonders bevorzugt ist Zitronensäure, da diese als Komplexbildner für Calciumionen fungiert. Die organische Säure kann in verdünnter oder konzentrierter Form zugegeben werden, wobei typische Konzentrationsbereiche bei 1 Gew.-% bis 15 Gew.-%, bevorzugt 3 Gew.-% bis 10 Gew.-% liegen. Bei der Zugabe der Säure ist darauf zu achten, dass die Zugabegeschwindigkeit der Konzentration der Säure angepasst wird. Die Zugabegeschwindigkeit ist überdies abhängig von der Dimension des Käsefertigers. Sie kann vorzugsweise so gewählt werden, dass es zu keinen - lediglich lokalen - Ausfällungen kommt. Weiterhin ist es empfehlenswert die Säure unter Rühren zu der erhitzten Milch zuzugeben. Die Menge an einzusetzender Säure wird durch den gewünschten Grad der Ausfällung der in Milch enthaltenen Proteine bestimmt. Es ist zwar nicht schädlich aber auch nicht sinnvoll eine Menge an Säure zuzugeben, die die für die vollständige Ausfällung an Milchproteinen erforderliche Menge übersteigt. Die Zugabe einer geringeren Menge an Säure ist im Hinblick auf die Käseausbeute nicht vorteilhaft, führt jedoch zu Käsematerialien, die ebenfalls zur Verwendung in der vorliegenden Erfindung geeignet sind.

Während der Zugabe der Säure in Schritt (b) wird die Temperatur der Milch bevorzugt bei der in Schritt (a) erreichten Temperatur gehalten. Geringe Schwankungen und/oder ein Absinken der Temperatur um weniger als 15 °C, bevorzugt um weniger als 10 °C, stärker bevorzugt um weniger als 5 °C ist jedoch akzeptabel.

**Schritt (c):** Anschließend wird die mit Säure versetzte Milch zur Flockung der in der Milch enthaltenen Proteine stehen gelassen. Die Dauer dieses Flockungsschrittes wird bestimmt durch die gewünschte Größe der sich bildenden Agglomerate. Diese Agglomerate weisen bevorzugt einen Durchmesser von zumindest 0,5 cm, stärker bevorzugt 1,5 cm, auf. Durchmesser, die dieses Kriterium erfüllen sind vorteilhaft, da sie das Abfüllen und Pressen des erhaltenen Rohmaterials erleichtern. Eine typische Dauer des Flockungsschrittes beträgt etwa 15 Minuten. Die Flockung erfolgt, ebenso wie die Säurezugabe, bevorzugt bei der Zieltemperatur der Milch im Schritt a. Ein (weiteres) Absinken der Temperatur um weniger als insgesamt 15 °C, bevorzugt weniger als 10 °C, stärker bevorzugt weniger als 5 °C ist jedoch akzeptabel. Vorzugsweise wird auch während des Flockungsschrittes gerührt. Zur besseren Entmolkung werden die groben Flocken mit geeigneten Vorrichtungen geschnitten und zerkleinert.

**Schritt (d):** In einem nächsten Verfahrensschritt wird die Molke abgetrennt. Typischerweise wird das Gemisch aus Käsebruch und Molke über ein Drainage-System geleitet, in dem der größte Teil der Molke entfernt wird. Geeignete Vorgehensweisen und Apparaturen sind dem Fachmann aus der konventionellen Käseherstellung bekannt.

Anschließend wird der Käsebruch in Käsepressformen abgefüllt, in denen weitere Molkenanteile durch Pressen entfernt werden. Das Pressen erfolgt geeigneterweise mit konventionellen kommerziell erhältlichen Käsepressformen. Hierbei wird typischerweise zunächst ein Druck von etwa 1 bar angelegt, der im Laufe des Pressens auf bis zu 6 bar gesteigert wird. Die Dauer des Pressens richtet sich nach der gewünschten Trockenmasse. D.h. das Pressen wird solange durchgeführt, bis die gewünschte Trockenmasse erhalten wird. Insgesamt werden in diesen Schritten typischerweise etwa 2/3 der Gesamtmasse als Molke abgeschieden. Während der Entfernung der Molke sinkt die Temperatur, sodass sie zu Beginn des Pressens bei ca. 60 bis 65 °C liegt. Anschließend kann der Käsebruch in der Presse auf Raumtemperatur abkühlen. Nach dem Abkühlen auf Raumtemperatur kann der so erhaltene Käse in einen Kühlraum überführt und dort gelagert werden.

Zum Aufbewahren kann der erhaltene Käse in Folie vakuumverpackt werden und vorher ggf. mit Gewürzen wie z.B. Salz versetzt werden. Es ist jedoch ebenfalls bevorzugt neben dem Salzen keine weiteren Gewürze in dieser Phase hinzuzufügen. Das Salzen kann entweder mittels Trockensalzung des Käsebruches vor dem Einfüllen in die Pressformen erfolgen oder ggf. auch durch ein Salzbad, in dem der bereits gepresste Käselaib eine vorbestimmte Zeit zum Erreichen des gewünschten Salzgehalts verbringt oder durch eine Salzung der Oberfläche des Käses.

Weitere Behandlungsschritte sind grundsätzlich zu jedem Zeitpunkt des Verfahrens denkbar, soweit diese das zu erzielende Ergebnis nicht beeinträchtigen.

**4.5 Weitere Zutaten**

Die Art und Menge der weiteren einzusetzenden Zutaten wird durch die gewünschten Eigenschaften des resultierenden Lebensmittelproduktes (z.B. Geschmack und Konsistenz) bestimmt. Hier gibt es grundsätzlich keine zwingenden Festlegungen.

Wie in Abschnitt 4.2 erläutert, betrifft die vorliegende Erfindung käsehaltige Lebensmittel, die sich von fleischhaltigen Lebensmitteln ableiten lassen, indem ein Teil oder der gesamte Fleischgehalt des Lebensmittels durch das oben beschriebene Käsematerial ersetzt wird. Ein typisches Beispiel eines derartigen Produktes ist eine Frikadelle auf Käsebasis oder eines Patty (= abgeflachte Frikadelle) auf Käsebasis, z.B. als geformte Masse zur Verwendung als "Käseburger". Die vorliegende Erfindung ist jedoch nicht auf modifizierte fleischhaltige Lebensmittel beschränkt. Daher gibt es auch keine Beschränkung hinsichtlich der einzusetzenden Zutaten und/oder hinsichtlich deren Vorbehandlung oder Zubereitung. Die nachfolgende Tabelle 1 gibt eine Übersicht über geeignete Kombinationen von Zutaten für die Herstellung käsehaltiger Frikadellen oder Patties. Zugabemenge jeweils in g pro 1.000 g Lebensmittel.

Tabelle 1

*Übersicht geeigneter Zutaten für Frikadellen / Patties*

| Beispiele für Varianten | Salz [g] | Pfeffer [g] | Cayennepfeffer [g] | Rosenpaprika (scharf) [g] | Paprika [g] | Petersilie [g] | Schnittlauch [g] | Rosmarin [g] | Basilikum [g] | Zwiebel [g] | Frühlingszwiebel [g] | Karotte [g] | Trockenpilze [g] | Pfifferlinge (Gals) [g] | Paprika (enthäutet) [g] | Zuccini [g] | Parmesan [g] | Bergkäse [g] | Gouda [g] | Milch / Sahne [g] | Patentkäse [g] | Ei [g] | Toastbrot [g] |
|---|---|---|---|---|---|---|---|---|---|---|---|---|---|---|---|---|---|---|---|---|---|---|---|
| Käse-Pflanzerl klassik | 10-15 | 3-7 | | | | 50 | | | | 125 | | | | | | | | | | 40-80 | 400-700 | 125 | 125 |
| Käse-Pflanzerl würzig | 7-12 | 3-7 | | | | 50 | | 3-5 | | 125 | | | | | | | 60-100 | 40-80 | | 40-80 | 300-600 | 125 | 125 |
| Käse-Pflanzerl mild-würzig | 7-12 | 3-7 | | 3-7 | | 30 | 20 | 3-5 | | | 125 | 20-50 | | | | | 60-100 | | 100-150 | 40-80 | 200-500 | 125 | 125 |
| Käse-Pflanzerl mit Pilzen | 10-15 | 3-7 | | | | 40-60 | | 3-5 | | | 125 | | 20-40 | 20-40 | | | 60-100 | | 60-100 | 40-80 | | 125 | 125 |
| Käse-Pflanzerl mit Paptrika | 10-15 | 2-5 | 2-5 | | | 50 | | 3-5 | 20-30 | 125 | | | | | 20-40 | | 60-100 | | | 40-80 | | 125 | 125 |
| Käse-Planzerl mit Zucchini | 10-15 | 3-7 | | | 20-40 | | | | | 125 | | | | | | 30-60 | 60-100 | | 60-100 | 40-80 | | 125 | 125 |

Ein wesentlicher Vorteil der erfindungsgemäßen käsehaltigen Lebensmittel ist deren Formstabilität beim Erhitzen. Es bedarf somit keiner Panierung wie sie z.B. beim Back-Camembert zwingend erforderlich ist. Dennoch ist es nicht grundsätzlich ausgeschlossen, das erfindungsgemäße käsehaltige Lebensmittel mit einer Panierung zu versehen. Dies kann aus Gründen, die nicht im Zusammenhang mit der Formstabilität stehen, von Interesse sein.

Hinsichtlich der konkreten einsetzbaren Zutaten und deren Mengen sei auf die entsprechenden Rezepte für fleischhaltige Lebensmittel verwiesen.

Es ist im Rahmen der vorliegenden Erfindung möglich, mangelnde Formstabilität des eingesetzten Käsematerials (bei Raumtemperatur und/oder in der Hitze) durch Zugabe geeigneter technofunktioneller Stoffe auszugleichen. Geeignete technofunktionelle Stoffe umfassen einerseits stabilisierende Lebensmittel, andererseits Zusatzstoffe wie Stabilisatoren, Dickungsmittel und Hydrokolloide. Als typische Vertreter dieser Stoffe sind die Lebensmittel Hühnereiweiß, Hühnerei, Gelatine, Stärke und die Zusatzstoffe modifizierte Stärke, Methylcellulose, mikrokristalline Cellulose, Carrageenan, Johannisbrotkernmehl und Alginate zu nennen. Technofunktionelle Stoffe können entweder bereits in das einzusetzende Käsematerial eingearbeitet werden, oder sie werden erst zusammen mit den übrigen Zutaten bei der Herstellung des fertigen käsehaltigen Lebensmittels eingesetzt. Die Menge an einzusetzenden technofunktionellen Stoffen richtet sich einerseits nach den strukturellen Eigenschaften des eingesetzten Käsematerials, und andererseits nach der funktionellen Wirkung des konkreten eingesetzten Stoffes. Eine bevorzugte Ausführungsform betrifft jedoch käsehaltige Lebensmittel, die unter Verwendung eines form- und hitzestabilen Käsematerials hergestellt werden und keiner Zusatzstoffe in obigem Sinne bedürfen, um die gewünschte Konsistenz und Stabilität aufzuweisen.

### 4.6 Herstellung des Lebensmittels

Das erfindungsgemäße käsehaltige Lebensmittel ist durch eine Mehrzahl einzelner Partikel des Käsematerials, welche durch andere Zutaten miteinander verbunden sind, gekennzeichnet. Eine derartige Struktur kann durch folgendes Herstellungsverfahren erhalten werden.

In einem ersten Schritt wird das Käsematerial mechanisch zerkleinert. Dies kann einerseits durch Wolfen erfolgen, andererseits jedoch auch durch Raspeln, Reiben, Würfeln oder Schneiden. Die Größe und Form der nach der mechanischen Zerkleinerung erhaltenen Käsematerialpartikel ist nicht näher festgelegt. Auch hier kann eine geeignete mechanische Zerkleinerung im Hinblick auf die gewünschten Eigenschaften des resultierenden Produktes gewählt werden. So können für die Herstellung von käsehaltigen Frikadellen typischerweise Käsepartikel im Größenbereich von 0,1 mm bis 2 cm, bevorzugt 1 mm bis 1 cm, stärker bevorzugt 2 mm bis 6 mm eingesetzt werden. Ebenso wie die Kombination verschiedener Käsematerialien ist auch eine Kombination von Käsematerialpartikeln verschiedener Größenverteilungen denkbar (wobei diese Partikel aus demselben oder verschiedenen Käsematerialien bestehen können).

Nach der mechanischen Zerkleinerung des Käsematerials werden die resultierenden Partikel mit weiteren Zutaten vermischt. Dieses Vermischen kann mit beliebigen, bekannten Misch- und Knetvorrichtungen und sogar im Extruder durchgeführt werden. Auch ein Vermischen per Hand ist im Rahmen der vorliegenden Erfindung möglich.

Als nächster Verfahrensschritt wird eine geeignete Menge der erhaltenen Mischung abgetrennt und nach Belieben geformt. Typisch ist beispielsweise bei käsehaltigen Frikadellen eine abgeflachte Kugelform. Das Formen kann ebenfalls unter Verwendung herkömmlicher Vorrichtungen und Verfahren oder auch per Hand erfolgen. Gemäß einer bevorzugten Ausführungsform können die Oberflächen des Lebensmittels mit längs oder radial verlaufenden Rillen oder Einkerbungen versehen werden. Dies kann beim Braten des erfindungsgemäßen Lebensmittels von Vorteil sein, da durch besagte Rillen Wasserdampf entweichen kann und so ein Spritzen des bratenden Lebensmittels vermieden oder reduziert werden kann. Rillen und Vertiefungen können auch vorgesehen werden um optisch ansprechende Muster zu erhalten, die beim Braten deutlich sichtbar werden.

Es ist im Rahmen der vorliegenden Erfindung möglich (aber nicht erforderlich) das geformte Lebensmittel weiter zu konfektionieren. So kann das erfindungsgemäße Lebensmittel angebraten bzw. vorgebraten werden. Auch andere Arten des Erhitzens wie z.B. Frittieren sind grundsätzlich denkbar. Gleichermaßen ist auch ein Panieren, äußeres Würzen und/oder Einbringen eines Kerns aus Fremdmaterial wie z.B. einer Soße oder eines in der Hitze schmelzenden Käses möglich.

Das Lebensmittel kann für die Lagerung, Transport und Verkauf vorteilhafterweise verpackt werden. Ach hier sind herkömmliche Verpackungsarten und Verpackungsmaterialien geeignet. Besonders vorteilhaft hat sich eine Verpackung im Vakuum oder unter Schutzgas (z.B. Stickstoff oder Kohlendioxid) erwiesen. Im Rahmen der vorliegenden Erfindung ist es weiterhin möglich, das erfindungsgemäße käsehaltige Lebensmittel gemeinsam mit Beilagen wie z.B. Gemüse, Soße und/oder Gewürzmischung unter Erhalt eines Fertigproduktes anzurichten und zu verpacken.

Lagerung und Transport können wie bei anderen Molkereiprodukten erfolgen. Zur Erhöhung der Lagerstabilität empfiehlt es sich weiterhin, das erfindungsgemäße Lebensmittel zu frosten.

**4.7 Eigenschaften, Anwendung und Einsatz des Lebensmittels**

Das erfindungsgemäße käsehaltige Lebensmittel ist nicht auf eine bestimmte Form beschränkt. Vielmehr kann es in jede gewünschte Form überführt werden, wobei Dünnstellen und Dickstellen der beabsichtigten Zubereitungsart anzupassen sind. Typische Formen des erfindungsgemäßen käsehaltigen Lebensmittels umfassen den Ball, den abgeflachten Ball (Frikadellenform), die abgeflachte Frikadelle (Patty), den Quader, längliche Quader (Stick), Riegel, sowie unregelmäßige Formen wie z.B. Nugget oder Schnitzelform. Das Verhältnis von Oberfläche zu Volumen kann je nach Zubereitungsart gewählt werden um eine ausreichende Erhitzung der inneren Bereiche ohne Schädigung der Oberfläche zu gewährleisten. Gleiches gilt für die Wahl der Größe der Form. Bevorzugte Größenbereiche liegen im Bereich von 1 cm bis 10 cm x 0,5 cm bis 10 cm x 0,5 cm bis 3 cm (Länge x Breite x Höhe), bzw. 1,5 cm bis 10 cm x 0,5 cm bis 3 cm (Durchmesser x Dicke).

In Fällen, in denen sich das erfindungsgemäße käsehaltige Lebensmittel an entsprechenden fleischhaltigen Lebensmitteln orientiert, ist es natürlich bevorzugt Form und Größe der entsprechenden Form und Größe des zugrunde liegenden fleischhaltigen Lebensmittels anzupassen.

Das erfindungsgemäße Lebensmittel kann grundsätzlich auf jede beliebige Art und Weise zubereitet werden. Die Vorteile der vorliegenden Erfindung kommen insbesondere bei einer Zubereitung durch Erhitzen wie Braten, Grillen, Backen, Frittieren, Kochen, Brühen, Toasten und auch durch Mikrowellenbehandlung zum Tragen. Als besonders vorteilhaft hat sich das käsehaltige Lebensmittel der vorliegenden Erfindung für ein Braten, Grillen oder Backen erwiesen.

Typische Anwendungsformen bzw. Ausgestaltungen des erfindungsgemäßen käsehaltigen Lebensmittels umfassen mit Beilagen angerichtete Fertiggerichte, wie z.B. Frikadelle mit Kartoffelsalat, Nugget mit Dip, den Burger, jedoch auch alternative Lebensmittel und daraus hergestellte und mit Beilagen angerichtete Fertiggerichte wie Tortilla-Wraps, Gyros, und Käse-Steaks.

**4.8 Zwischenprodukt**

4.8.1 "Käsehack"

Die vorliegende Erfindung betrifft weiterhin das Zwischenprodukt "Käsehack", welches nach dem mechanischen Zerkleinern und ggf. durch Vermischen des Käsematerials mit weiteren Zutaten erhalten wird. Dieses Produkt entspricht im Hinblick auf Eigenschaften und Verwendungsmöglichkeiten einem Hackfleisch (zerkleinertes Fleisch) oder einer Zubereitung aus Hackfleisch (Hackfleisch mit Zutaten). Es kann daher ebenso wie Hackfleisch oder wie eine Zubereitung aus Hackfleisch in dieser Form dem Verbraucher zur eigenen Weiterverarbeitung angeboten werden. Der Verbraucher kann dann zu Hause das Käsehack nach Wunsch formen und zu einem fertigen Gericht zubereiten.

Partikelgrößen und weitere Zutaten des Käsehacks sind nicht festgelegt. Es ist jedoch vorteilhaft Partikelgrößen und weitere Zutaten so zu wählen, dass das erhaltene Käsehack sich für die Zubereitung von Lebensmitteln eignet, die fleischhaltigen Lebensmitteln entsprechen oder ähneln, welche ihrerseits aus Hackfleisch hergestellt werden. Ebenso ist es bevorzugt das Käsehack aus Partikeln von Käsematerial herzustellen, welche in ihren Partikelgrößen den typischen Partikelgrößen von Hackfleisch entsprechen. Bevorzugt sind daher insbesondere durchschnittliche Partikelgrößen im Bereich von 0,5 mm bis 5 mm, stärker bevorzugt 1 mm bis 3 mm und insbesondere 1 mm bis 2 mm.

Hinsichtlich der bevorzugten Bestandteile/Zutaten sei auf obige Tabelle 1 verwiesen.

4.8.2 Geschnetzeltes

Die vorliegende Erfindung betrifft weiterhin Zwischenprodukte, die sich zur Herstellung von Lebensmitteln bzw. Fertiggerichten eignen, welche gröbere Käsepartikel enthalten. Typische Vorbilder dieser Lebensmittel und Fertiggerichte sind verschiedene Arten von Geschnetzeltem wie Gyros, Gulasch und Wok-Gerichte. Das erfindungsgemäße Zwischenprodukt gemäß dieser Ausführungsform ist entsprechend durch (im Vergleich zum Zwischenprodukt "Käsehack") größere Käsepartikel gekennzeichnet. Typische Partikelgrößen liegen im Bereich von ca. 1 cm bis ca. 7 cm, bevorzugt von ca. 1,5 cm bis ca. 5 cm. Die für dieses Zwischenprodukt einsetzbaren weiteren Zutaten richten sich nach der jeweiligen Art des angestrebten Endprodukts. Hierbei können die aus den entsprechenden Fleisch-basierten Gerichten bekannten Zutaten und deren Mengen ohne weitere Anpassungsmaßnahmen übernommen werden.

**4.9 Ausführungsbeispiele**

4.9.1 Herstellung des Käsematerials

- 15000 Liter Kesselmilch (3,7 % Fett) über Plattenwärmetauscher so erhitzen, dass Milch im Fertiger bei 85 °C vorgelegt wird. Weiteres Aufheizen der Milch mittels indirektem Dampf und unter ständigem Rühren auf 90 °C bis 95 °C
- Heißhaltezeit der Milch im Fertiger ca. 1 Stunde bei über 90 °C
- Dosage von 1350 1 Zitronensäure (3,5 Gew.-%) innerhalb von ca. 15 min
- pH-Wert nach der Zugabe von Zitronensäure: 4,3 bis 4,7
- danach Bruch absetzen lassen, Schneiden und Rühren
- Molkeabscheidung über Entmolkungsband
- Abfüllen des Käsebruches in Formen
- 12 Stunden bei 3 bar pressen

| Charakteristika des Käsemateriales | |
|---|---|
| Trockenmasse: | 61 % |
| Fett: | 25 % |
| Fett i. Tr.: | 41,7 % |
| Eiweiß: | 30,9 % |
| Casein : Molkenprotein | 80 : 20 |
| Denaturierungsgrad β-Lactoglobulin: | 95 % |
| pH-Wert: | 4,9 |

Die nachfolgenden Versuche wurden mit dem oben beschriebenen Käsematerial durchgeführt.

4.9.2. Käsehaltige Zwischenprodukte, Lebensmittel und Fertiggerichte:

| Frikadelle (Pflanzerl), Patty auf Käsebasis | |
|---|---|
| Zutaten | Menge (g) |
| Ei | 125 |
| Knödelbrot | 125 |
| Wasser | 60 |
| Zwiebeln | 125 |
| Petersilie | 50 |
| Salz | 10 |
| Pfeffer | 5 |
| Käse gewolft | 250 |
| Käse gewürfelt | 250 |
| | |
| Gesamtmenge | 1000 g |

Die Zutaten wurden gemischt, die Mischung wurde kurz ziehen gelassen. Die resultierende Mischung wurde zu Frikadellen (Pflanzerln) bzw. Patties ausgeformt und in der Pfanne von beiden Seiten angebraten. Die Frikadellen (Pflanzerln) wurden zusammen mit Kartoffelsalat serviert, die Patties wurden zur Herstellung von Käse-Burgern eingesetzt.

Die Frikadellen/Patties zeigten ein hervorragendes Bratverhalten, sie behielten die Form, zerliefen nicht und spritzten auch nicht übermäßig.

Die erhaltenen Frikadellen zeigten ausgezeichnete organoleptische Eigenschaften und Konsistenz, die jenen typischer Fleisch-Frikadellen ebenbürtig waren.

**Burger auf Käsebasis:**

Patties wurden wie oben gezeigt mit angetoasteten Burgerbrötchen, Ketchup, Mayonnaise, Blattsalat, Tomatenscheibe und einer Schmelzkäsescheibe kombiniert und zu einem Burger angerichtet.

Auch die erfindungsgemäßen Burger zeigten eine ausgezeichnete Konsistenz und vortreffliche organoleptische Eigenschaften.

| Riegel auf Käsebasis: | |
|---|---|
| Zutaten | Menge [g] |
| Ei | 100 |
| Knödelbrot | 60 |
| Kokosmilch | 50 |
| Paprikawürfel | 15 |
| Ingwer | 5 |
| Bambussprossen | 30 |
| Sojasprossen | 30 |
| Shitake | 30 |
| Lauchzwiebeln | 50 |
| Salz | 6 |
| Pfeffer | 3,7 |
| Chilli | 0,3 |
| Käse gewolft | 520 |
| Ananas | 40 |
| Soße | 60 |
| | |
| Gesamtmenge | 1000 g |

Die genannten Zutaten wurden unter Erhalt einer Masse gemischt. Die Masse wurde zu Riegeln geformt, und die Riegel wurden von allen Seiten gleichmäßig angebraten.

Erneut wies das Produkt ausgezeichnetes Bratverhalten auf.

**Wrap (Typ Asia) auf Käsebasis**

Asiatisches Gemüse wurde kleingeschnitten, auf einem Wrap (Teigfladen) verteilt, der vorstehend beschriebene Riegel eingelegt, Asiasoße darübergegeben, und das Wrap gerollt.

Der Wrap zeigte eine Konsistenz und organoleptische Eigenschaften, die vollumfänglich zufrieden stellten.

**Gyros auf Käsebasis**

Käse wurde in feine Streifen geschnitten, gesalzen und gepfeffert. Gyrosgewürz wurde nach Belieben zugegeben, und es wurde in Öl kräftig angebraten.

Servieren des Gerichtes: Fladenbrot wurde angewärmt, heißes Gyros in das Fladenbrot gegeben, dazu wurden - frisch geschnitten - Zwiebel, Weißkraut, Blaukraut, Tomaten- und Gurkenwürfel sowie Tzatziki zugegeben.

Erneut wurden sowohl ausgezeichnetes Bratverhalten als auch Konsistenz und organoleptische Eigenschaften des Produkts festgestellt, die voll und ganz zufrieden stellten.

**Geschnetzeltes auf Käsebasis:**

Käse wurde in breite, 5 cm lange Streifen geschnitten, gesalzen und gepfeffert, in der Pfanne angebraten und warmgestellt.

Zwiebel, Pilze und Zucchini wurden in Öl angebraten, und mit Salz, Pfeffer, Senf und Paprika gewürzt. Es wurde mit Sahne aufgegossen und abgeschmeckt.

Das erhaltene Gemüse wurde mit angebratenen Käsestreifen vereinigt, und serviert.

Auch in diesem Anwendungsbeispiel konnte das erfindungsgemäße Lebensmittel sowohl im Bratverhalten als auch in Konsistenz und organoleptischen Eigenschaften die gestellten Erwartungen erfüllen. Das Gericht war einem fleisch-basierten Geschnetzeltem ebenbürtig.

**Patentansprüche**

1. Verfahren zum Herstellen eines käsehaltigen Lebensmittels, umfassend die Schritte:

   a. Bereitstellen eines Käsematerials;
   b. Mechanisches Zerkleinern des Käsematerials;
   c. Vermischen mit weiteren Zutaten unter Erhalt eines Zwischenprodukts, so dass der Gehalt an Käsematerial bezogen auf das Gesamtgewicht des Zwischenprodukts mindestens 20 Gew.-% beträgt;
   d. Formen des Zwischenprodukts unter Erhalt eines Lebensmittels.

2. Verfahren gemäß Anspruch 1, wobei als Käsematerial ein Material eingesetzt wird, das einen Furosingehalt von mehr als 10 mg/kg, und einen Gehalt an Molkenprotein im Milcheiweiß von 0 bis 60 % aufweist, und wobei der Gehalt an denaturiertem β-Lactoglobulin mehr als 70 % bezogen auf das gesamte β-Lactoglobulin beträgt.

3. Verfahren gemäß Anspruch 1 oder 2, wobei als Käsematerial ein Material eingesetzt wird, das eine Trockenmasse von 30 % bis 70 % aufweist.

4. Verfahren gemäß Anspruch 1, 2 oder 3, wobei als Käsematerial ein Material eingesetzt wird, das einen Molkenproteingehalt von 10 % bis 40 % aufweist.

5. Verfahren gemäß irgendeinem der vorstehenden Ansprüche, wobei die Partikelgröße des in Schritt (b) in Anspruch 1 erhaltenen zerkleinerten Käsematerials von 0,1 mm bis 2 cm beträgt

6. Verfahren gemäß irgendeinem der vorstehenden Ansprüche, umfassend weiterhin den Schritt des Einführens eines Fremdkerns ausgewählt aus Käse, Sauce oder sonstigen Lebensmitteln.

7. Verfahren gemäß irgendeinem der vorstehenden Ansprüche, wobei während oder nach Schritt (d) des Anspruches 1 Rillen oder Hohlkehlen in die Oberflächen des geformten Lebensmittels eingearbeitet werden.

8. Verfahren gemäß irgendeinem der vorstehenden Ansprüche, wobei als Käsematerial ein Material eingesetzt wird, das durch eines der folgenden Verfahren A oder B erhältlich ist:

   Verfahren A:

   Aa. Erhitzen von Milch auf Temperaturen von über 75 °C bis zu UHT-Erhitzungsbedingungen, Vorlegen der Milch im Fertiger in einem Temperaturbereich von 75 bis 100 °C.
   Ab. Zugabe einer für Nahrungsmittel geeigneten Säure bei einer Temperatur von 75 bis 100 °C;
   Ac. Flockung bei einer Temperatur im Bereich von 75 bis 100 °C über 5 bis 45 Minuten;
   Ad. Abtrennen der Molke und gegebenenfalls Pressen bis zu einem Gehalt an Trockenmasse des Käsebruches von 30 bis 70 Gew.-%;

   Verfahren B:

   Ba. Erhitzen eines Ausgangsmateriales, das durch Ultrafiltration oder Mikrofiltration von Milch, gefolgt von einer Fettstandardisierung mit Rahm oder Pflanzenfett enthaltende Materialien, oder das durch Konzentrieren von Milch und / oder durch Zufügen von konzentrierter Milch erhalten wurde;
   Bb. Zugabe einer für Nahrungsmittel geeigneten Säure bei erhöhter Temperatur;
   Bc. Flockung bei erhöhter Temperatur;
   Bd. Abtrennen der Molke und gegebenenfalls Pressen bis zu einem Gehalt an Trockenmasse des Käsebruches von 30 bis 70 Gew.-%,

wobei die Temperatur der Verfahrensschritte (Ba) bis (Bc) sowie die Dauer der Verfahrensschritte (Ba) und (Bc) so gewählt werden, dass der Furosingehalt des resultierenden Käsematerials mehr als 10 mg/kg, der Gehalt an Molkenprotein im Bereich von 10 bis 60% und der Gehalt an denaturiertem β-Lactoglobulin bezogen auf das gesamte β-Lactoglobulin im Bereich von mehr als 70 % liegen.

9. Lebensmittel erhältlich durch ein Verfahren gemäß einem oder mehreren der Ansprüche 1 bis 8.

10. Lebensmittel gemäß Anspruch 9, wobei das Lebensmittel in Form einer Frikadelle, Patty, Schnitzel, Ball, Quader, Riegel, Stick oder Nugget vorliegt

11. Zwischenprodukt erhältlich durch das Verfahren gemäß Schritten (a) bis (b) und gegebenenfalls (c) des Verfahrens nach Anspruch 1, gegebenenfalls weiterhin **gekennzeichnet durch** ein oder mehrere der Merkmale der Ansprüche 2 bis 5 und 8.

12. Zwischenprodukt gemäß Anspruch 11, das in Form der Ausgangsbasis von Frikadellen, Nuggets, Geschnetzeltem wie z.B. Gyros, Gulasch oder Wok-Gerichten vorliegt.

13. Verfahren zur Herstellung eines Fertiggerichts, umfassend einen oder beide der folgenden Schritte in beliebiger Reihenfolge:

    a. Erhitzen wie z.B. Braten, Frittieren, Grillen oder Backen, Kochen, Brühen, Mikrowellenbehandlung, Toasten des Lebensmittels gemäß Anspruch 9 oder 10, welches gegebenenfalls vorbehandelt ist oder eines Zwischenprodukts gemäß Anspruch 11 oder 12, welches gegebenenfalls vorbehandelt ist und/oder vorher in eine gewünschte Form gebracht wurde;
    b. Kombinieren des Lebensmittels gemäß Anspruch 9 oder 10, welches gegebenenfalls vorbehandelt ist oder eines Zwischenprodukts gemäß Anspruch 11 oder 12, welches gegebenenfalls vorbehandelt ist und/oder vorher in eine gewünschte Form gebracht wurde mit einer oder mehreren Beilagen

14. Fertiggericht, erhältlich durch das Verfahren nach Anspruch 13.

15. Fertiggericht gemäß Anspruch 14, welches die Form eines Burgers, Wraps, Geschnetzelten wie Gyros, Gulasch und Wok-Gerichten, oder eines fertig zubereiteten Gerichts ausgewählt aus Schnitzel, Nugget, und Frikadelle, jeweils mit Beilage, aufweist.

16. Verfahren zum Herstellen eines Käsematerials, ausgewählt aus den Verfahren A und B, wobei die Verfahren A und B durch die folgenden Verfahrensschritte **gekennzeichnet** sind:

    Verfahren A:

    Aa. Erhitzen von Milch auf Temperaturen von über 75 °C bis zu UHT-Erhitzungsbedingungen, Vorlegen der Milch im Fertiger in einem Temperaturbereich von 75 °C bis 100 °C.
    Ab. Zugabe einer für Nahrungsmittel geeigneten Säure bei einer Temperatur von 75 bis 100 °C;
    Ac. Flockung bei einer Temperatur im Bereich von 75 bis 100 °C über 5 bis 45 Minuten;
    Ad. Abtrennen der Molke und gegebenenfalls Pressen bis zu einem Gehalt an Trockenmasse des Käsebruches von 30 bis 70 Gew.-%;

    Verfahren B :

    Ba. Erhitzen eines Ausgangsmateriales, das durch Ultrafiltration oder Mikrofiltration von Milch, gefolgt von einer Fettstandardisierung mit Rahm oder Pflanzenfett enthaltende Materialien, oder das durch Konzentrieren von Milch und / oder durch Zufügen von konzentrierter Milch erhalten wurde;
    Bb. Zugabe einer für Nahrungsmittel geeigneten Säure bei erhöhter Temperatur;
    Bc. Flockung bei erhöhter Temperatur;
    Bd. Abtrennen der Molke und gegebenenfalls Pressen bis zu einem Gehalt an Trockenmasse des Käsebruches von 30 bis 70 Gew.-%,

wobei die Temperatur der Verfahrensschritte (Ba) bis (Bc) sowie die Dauer der Verfahrensschritte (Ba) und (Bc) so gewählt werden, dass der Furosingehalt des resultierenden Käsematerials mehr als 10 mg/kg, der Gehalt an Molkenprotein im Bereich von 10% - 60% und der Gehalt an denaturiertem β-Lactoglobulin bezogen auf das gesamte β-Lactoglobulin im Bereich von mehr als 70 % liegen.

17. Käsematerial erhältlich durch das Verfahren gemäß Anspruch 16.

**Europäisches**
**Patentamt**

**EUROPÄISCHER RECHERCHENBERICHT**

Nummer der Anmeldung

EP 08 01 0259

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | KR 100 744 830 B1 (LOTTERIA CO LTD [KR]) 25. Juli 2007 (2007-07-25) * Zusammenfassung * ----- | 1-17 | INV. A23C19/045 A23C19/09 |
| X | WO 96/15680 A (MORELEIGH LTD [GB]; OVERTON BRUCE STUART [GB]) 30. Mai 1996 (1996-05-30) * Seite 3, Absatz 6 - Seite 5 * ----- | 1-17 | |
| X | GB 484 791 A (ROBERT BARON) 10. Mai 1938 (1938-05-10) * das ganze Dokument * ----- | 1-17 | |
| X | DE 10 2004 049709 A1 (CAMPINA BV [NL]) 25. Mai 2005 (2005-05-25) * Beispiel 6 * ----- | 1-17 | |
| X | CH 681 845 A5 (JOHANNES MINDER) 15. Juni 1993 (1993-06-15) * das ganze Dokument * ----- | 1-17 | |
| X | DE 29 25 372 A1 (GEIST JOSEF) 8. Januar 1981 (1981-01-08) * Seite 6, Zeile 14 - Seite 7 * ----- | 1-17 | RECHERCHIERTE SACHGEBIETE (IPC)  A23C |
| X | WO 92/07472 A (L & N DI NASI ANNA CRISTINA E [IT]; A M G S A S DI CATELLANI ARMAN [IT] 14. Mai 1992 (1992-05-14) * das ganze Dokument * ----- | 1-17 | |
| X | US 2003/175394 A1 (MODLER H WAYNE [CA]) 18. September 2003 (2003-09-18) * Ansprüche 10-13; Beispiele 4,5,8,9 * ----- | 16,17 | |

Der vorliegende Recherchenbericht wurde für alle Patentansprüche erstellt

| Recherchenort | Abschlußdatum der Recherche | Prüfer |
|---|---|---|
| Den Haag | 14. August 2008 | Koch, Jürgen |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
..........................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 08 01 0259

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-08-2008

| Im Recherchenbericht angeführtes Patentdokument | Datum der Veröffentlichung | Mitglied(er) der Patentfamilie | Datum der Veröffentlichung |
|---|---|---|---|
| KR 100744830 B1 | 25-07-2007 | KEINE | |
| WO 9615680 A | 30-05-1996 | DE 69527150 D1<br>EP 0792105 A1 | 25-07-2002<br>03-09-1997 |
| GB 484791 A | 10-05-1938 | KEINE | |
| DE 102004049709 A1 | 25-05-2005 | BE 1016214 A3<br>NL 1024528 C2 | 02-05-2006<br>14-04-2005 |
| CH 681845 A5 | 15-06-1993 | KEINE | |
| DE 2925372 A1 | 08-01-1981 | KEINE | |
| WO 9207472 A | 14-05-1992 | KEINE | |
| US 2003175394 A1 | 18-09-2003 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 20221020 U1
- NL 1008364 C

- WO 1996131177 A